# EUROPÄISCHE PATENTANMELDUNG

(11) **EP 4 223 555 A1**
(43) Veröffentlichungstag der Anmeldung: **09.08.2023**
(21) Anmeldenummer: 22155332.4
(22) Anmeldetag: 07.02.2022
(51) Int. Cl.: B60C 1/00, C08K 3/04, C08K 3/22, C08K 3/30, C08K 3/32, C08K 3/36, C08K 5/18, C08K 5/40, C08K 5/46, C08K 5/5415, C08K 5/548, C08L 7/00, C09J 107/00, C08K 5/32

(54) **KAUTSCHUKMISCHUNGEN ENTHALTEND ZINKOXID**

(71) Anmelder: LANXESS Deutschland GmbH, 50569 Köln (DE)
(72) Erfinder: Weidenhaupt, Hermann-Josef, 50259 Pulheim (DE); Wiedemeier-Jarad, Melanie, 41540 Dormagen (DE)

(57) **Zusammenfassung**

Die Erfindung betrifft Kautschukmischungen, enthaltend neben bestimmten Mengen Naturkautschuk, synthetischen Kautschuk, Füllstoffen und Vernetzer 0,5 bis 2,5 phr Zinkoxid mit einer BET-Oberfläche von ≥ 10 m²/g, geeignet zur Herstellung abriebarmer Vulkanisate.

## Beschreibung

Die Erfindung betrifft neue Kautschukmischungen enthaltend u.a. Zinkoxid mit einer BET-Oberfläche von ≥ 10 m²/g, Verfahren zur deren Herstellung und deren Verwendung zur Herstellung von Kautschukvulkanisaten, die entsprechenden Vulkanisate sowie die Verwendung von Zinkoxid mit einer BET-Oberfläche von ≥ 10 m²/g in Kautschukmischungen, -vulkanisaten und daraus erhältlichen Formkörpern zur Reduzierung des Abriebs von Formkörpern diese enthaltende Vulkanisate, bevorzugt von Reifen.

Die Zunahme von Mikroplastik- und Kunststoffabfällen in der Umwelt ist besorgniserregend. In diesem Zusammenhang gerät auch der Reifen- und Straßenabrieb immer wieder in den Fokus der öffentlichen Debatte. Die im Wirtschaftsverband der deutschen Kautschukindustrie e.V. (wdk) vertretenen Reifenhersteller bekennen sich zu dem Ziel, ihren Beitrag zu einer gesunden Umwelt zu leisten. Ein wichtiger Aspekt hierbei ist die Reduktion des Abriebs von Reifen.

Dem Fachmann ist bekannt, dass eine sehr große Auswahl an Additiven Kautschukmischungen beigemischt werden kann, um die Eigenschaften der Mischungen und der daraus resultierenden Vulkanisate zu beeinflussen, und/oder es werden spezifische Kautschuktypen / Polymere zu diesem Zweck verwendet. Beispiele für Additive sind Füllstoffe wie Ruß oder Kieselsäuren, Weichmacher, Alterungsschutzmittel und Vernetzungssysteme, die aus Schwefel, Beschleunigern und Aktivatoren wie beispielsweise Metalloxiden wie Zinkoxid bestehen können.

Generell spielt Zink in dem chemischen Reaktionsprozess, der als Vulkanisation bekannt ist und Gummi von einem plastischen Zustand in einen elastischen Gegenstand umwandelt, eine entscheidende Rolle als Aktivator.

Reifenhersteller verwenden Zink oder Zinkoxid, weil es die höchste Anzahl von Querverbindungen in der Gummikette aktiviert und fördert, was einem fertigen Reifen Festigkeit, Stabilität und andere nützliche Eigenschaften verleiht.

Zinkverbindungen in Kautschukmischungen sind jedoch in die Diskussion geraten, da es sich bei Zink um ein Schwermetall handelt. Insofern ist das Ziel, die Mengen an Zink, die besonders durch Abrieb von Reifen insbesondere aus dem Laufstreifen in die Umwelt gelangen können, zu reduzieren.

Aufgrund der vorgenannten Probleme ist man bestrebt, den Anteil an Zinkverbindungen in Kautschukmischungen für Reifen weiter zu reduzieren.

Zur Verringerung des Abriebs wird beispielsweise in WO2010/049216A1 (=EP2342088A1) nach wie vor mit üblichen Mengen an ZnO gearbeitet und dabei auf ein spezielles 4-fach funktionelles Vulkanisationsmittel gesetzt um dieses Ziel zu erreichen.

In EP2700670 A1 wurde stattdessen versucht, den Anteil von normalem ZnO mit geringer Oberfläche zu verringern - es wurde ZnO Rotsiegel Gran. der Firma Grillo ZnO GmbH mit einer BET von 4 - 6 m²/g eingesetzt. Zwar konnte der ZnO Gehalt bei vergleichbarem Abrieb des Vulkanisats reduziert werden, jedoch nur unter Inkaufnahme von schlechteren Verarbeitungseigenschaften der Kautschukmischungen, allen voran die deutlich verkürzte Anvulkanisationszeit.

In EP1927623A1 wird bspw. die Anvulkanisationszeit lediglich über die Menge üblicher Zinkoxide mit einer beispielhaft eingesetzten BET Oberfläche von 3,8 bis zu 8.8 m²/g eingestellt, wobei die Anvulkanisationszeit bei Zinkoxiden mit höherer BET gegenüber der gleichen Menge an Zinkoxiden mit kleiner BET abnimmt. Die in EP1927623A1 beschrieben Effekte der Kautschukmischungen sind jedoch losgelöst von speziellen Eigenschaften des Vulkanisats.

Die Aufgabe der vorliegenden Erfindung war es daher, den Gehalt an ZnO in Kautschukmischungen zu reduzieren bei vergleichbarem Abrieb der daraus erhältlichen Vulkanisate, insbesondere für LKW-Laufflächen, ohne die Verarbeitungseigenschaften der Kautschukmischungen, allen voran die Anvulkanisationszeit, insbesondere die Scorch-Zeit (MS-t3) zu verschlechtern. Letztere liegt bevorzugt im Bereich von 700-800 s.

Auch die Ausvulkanisationszeit (Umsatzzeit 95%) bei einer Temperatur von 130°C sollte im Bereich von 600-800 s liegen.

Die Mooney Viskosität ML (1+4 bei 100°C) der erfindungsgemäßen Kautschukmischungen liegt bevorzugt im Bereich 50-56 Einheiten.

Ein guter Abriebwert für erhaltenen Vulkanisate der erfindungsgemäßen Kautschukmischungen liegt bei 50 bis 56 Einheiten gemessen nach dem Verfahren B der ISO 4649.

Für Vulkanisate ist auch eine hohe Bruchdehnung insbesondere für die Reifenlaufflächen wichtig. Bevorzugt beträgt die Bruchdehnung nach DIN 53504 (Stab S. 2) 400 % oder mehr, vorzugsweise von 400 bis 550 %.

Im Folgenden steht die Einheit "phr" für Gewichtsteile bezogen auf 100 Gewichtsteile der Gesamtmenge an in der Kautschukmischung enthaltenem Kautschuk, d.h. die Gesamtmenge an Naturkautschuk(en) und Synthesekautschuken.

Überraschenderweise wurde gefunden, dass die erfindungsgemäßen Kautschukmischungen, enthaltend
- 50 bis 100 phr, bevorzugt 70 bis 90 phr mindestens eines Naturkautschuks,
- 0 bis 50 phr, bevorzugt 10 bis 30 phr mindestens eines synthetischen Kautschuks,
- 0,5 bis 2,5 phr Zinkoxid mit einer BET-Oberfläche von ≥ 10 m²/g, vorzugsweise von 10 bis 60 m²/g, insbesondere von 40 bis 60 m²/g,
- 0,1 bis 320 phr mindestens einen hydroxylgruppenhaltigen oxidischen Füllstoff und/oder mindestens einen Ruß und
- 0,5 bis 20 phr mindestens eines Vernetzers, insbesondere aus der Reihe der Schwefelspender und/oder Schwefel
dieses Problem lösen können.

Vulkanisate, die aus den erfindungsgemäßen Kautschukmischungen erhalten wurden, welche Zinkoxid mit einer BET-Oberfläche von ≥ 10 m²/g enthalten, weisen einen vergleichbare niedrigen Abrieb selbst bei deutlich geringen Mengen an ZnO auf, verglichen mit Vulkanisaten erhalten aus entsprechenden Kautschukmischungen, welche Zinkoxid mit einer BET-Oberfläche von < 10 m²/g enthalten.

Eine entsprechende Referenzmischungen ist beispielsweise bereits in der US2019/0345314 A1 als "Mischung A" beschrieben.

Dieser Vorteil als auch eine höhere Bruchdehnung der Vulkanisate konnte bei vergleichbaren oder sogar besseren anwendungstechnischen Eigenschaften bei der Verarbeitung der erfindungsgemäßen Kautschukmischungen, wie einer längeren Anvulkanisationszeit (Scorchzeit) sowie eine kürzere Ausvulkanisationszeit, erhalten werden.

Darüber hinaus können die zuvor genannten Vorteile sogar bei Einsatz von weniger Zinkoxid mit einer BET-Oberfläche von ≥ 10 m²/g erzielt werden, verglichen mit dem Einsatz von Zinkoxid mit einer BET-Oberfläche von < 10 m²/g einer Referenzmischung.

### Kautschuke

Bei dem Naturkautschuk (NR) handelt es sich um ein Polymerisat aufgebaut aus Isopren-Einheiten (2-Methyl-1,3-butadien), vorzugsweise mit einer fast einheitlichen cis-1,4-Verknüpfung. Die mittlere molare Masse des Naturkautschuks liegt vorzugsweise bei etwa 500.000 bis 2 Millionen g-mol⁻¹.

NR ist in der Regel ein gummiartiger Stoff, der im Milchsaft (Latex) vieler verschiedener Kautschukpflanzen vorkommt.

Naturkautschuk aus cis-1,4 Polyisopren wird hauptsächlich aus dem Saft der Rinde der Hevea basiliensis bzw. der Landolphia owariensis, aus dem mexikanischen Guayule-Strauch oder der russischen Löwenzahn-Pflanze (taraxacum koksaghyz) gewonnen. Des Weiteren gibt es das *trans*-1,4-Polyisopren. Dies wird in der Regel aus dem Palaquiumbaum (Palaquium gutta) gewonnen.

Ebenfalls aus trans-1,4-Polyisopren besteht Balata, das einen hohen Harzanteil aufweist und aus dem Balatabaum (Manilkara bidentata) gewonnen wird.

Erfindungsgemäß können alle Arten von Naturkautschuk oder deren Mischungen eingesetzt werden.

Bevorzugt ist der mindestens eine Naturkautschuk ein technisch spezifizierter Naturkautschuk (TSR), besonders bevorzugt ausgewählt aus der Gruppe bestehend aus Standard Malaysian rubber (SMR) und "Ribbed Smoked Sheets" (RSS).

Bevorzugt beträgt der Gesamtgehalt der Naturkautschuke in der erfindungsgemäßen Kautschukmischung 70 bis 90 phr.

Der mindestens eine Synthesekautschuk ist bevorzugt ausgewählt aus der Gruppe bestehend aus polaren und unpolaren Synthesekautschuken.

Bevorzugte polare und unpolare Synthesekautschuke sind
- BR -: Polybutadien
- ABR -: Butadien/Acrylsäure-C1-C4-alkylester-Copolymerisat
- CR -: Polychloropren
- IR -: Polyisopren
- SBR -: Styrol/Butadien-Copolymerisate mit Styrolgehalten von 1 - 60, vorzugsweise 20-50 Gew-%
- IIR -: Isobutylen/Isopren-Copolymerisate
- NBR -: Butadien/Acrylnitril-Copolymerisate mit Acrylnitrilgehalten von 5-60, vorzugsweise 10-50 Gew.-%
- HNBR -: teilhydrierter oder vollständig hydrierter NBR-Kautschuk
- EPDM -: Ethylen/Propylen/Dien-Copolymerisate
- SIBR -: Styrol-Isopren-Butadien Kautschuk
- ENR -: Epoxidierter Naturkautschuk
- SNBR -: Arcylnitril-Styrol/Butadien Kautschuk
- HNBR-: Hydrierter Arcylnitril/Butadien Kautschuk
- XNBR-: Carboxylisierter Arcylnitril/Butadien Kautschuk
- HXNBR -: Hydrierter carboxylisierter Arcylnitril/Butadien Kautschuk

Bevorzugt ist der mindestens eine Synthesekautschuk ein unpolarer Synthesekautschuk ausgewählt aus der Gruppe bestehend aus SBR, BR, IR, SIBR, IIR, ENR und EPDM, besonders bevorzugt aus der Gruppe bestehend aus SBR, BR, IIR und EPDM, ganz besonders bevorzugt BR und/oder SBR.

Bevorzugt beträgt der Gesamtgehalt der Synthesekautschuke, insbesondere der unpolaren Synthesekautschuke in der erfindungsgemäßen Kautschukmischung 10 bis 30 phr.

### Zinkoxid

Die erfindungsgemäßen Kautschukmischungen enthalten Zinkoxid mit einer BET-Oberfläche von ≥ 10 m²/g, wobei die BET-Oberfläche von Zinkoxid im Rahmen dieser Erfindung gemäß DIN ISO 9277 gemessen wurde.

Bevorzugt weist das Zinkoxid eine BET-Oberfläche von 10 m²/g - 100 m²/g, besonders bevorzugt von 20-80 m²/g, ganz besonders bevorzugt von 30-70 m²/g, insbesondere von 40-60 m²/g auf.

Bevorzugt enthalten die erfindungsgemäßen Kautschukmischungen 0,5 bis 2,0 phr, Zinkoxid mit einer BET-Oberfläche von ≥ 10 m²/g.

### Füllstoffe

Bevorzugt beträgt der Gehalt an hydroxylgruppenhaltigen oxidischen Füllstoffen in den erfindungsgemäßen Kautschukmischungen 0,1 bis 200 phr, vorzugsweise 20 bis 160 phr, besonders bevorzugt 25 bis 140 phr und ganz besonders bevorzugt 30 bis 120 phr.

Als hydroxylgruppenhaltige oxidische Füllstoffe eignen sich bevorzugt solche aus der Reihe der
- Kieselsäuren, insbesondere mit einer spezifischen Oberfläche (BET) von 5 bis 1000, vorzugsweise 20 bis 400 m²/g, vorzugsweise mit Primärteilchengrößen von 100 bis 400 nm, wobei die Kieselsäuren gegebenenfalls auch als Mischoxide mit anderen Metalloxiden, wie AI-, Mg-, Ca-, Ba-, Zr-, Ti-oxiden vorliegen,
- synthetischen Silikate, wie Aluminiumsilikat, Erdalkalisilikate wie Magnesiumsilikat oder Calciumsilikat, mit spezifischen Oberflächen (BET) von 20 bis 400 m²/g, vorzugsweise mit Primärteilchengrößen von 10 bis 400 nm
   und
- natürlichen Silikate, wie Kaolin und andere natürliche vorkommende Kieselsäuren, sowie Mischungen davon.

Die oben genannten BET Oberflächen, werden ebenfalls wie die des Zinkoxids bestimmt. Die Größenangaben der Primärteilchengrößen basieren auf Messungen mit einem Prüfgerät zur Partikelanalyse mittels Streulicht. Die Berechnung der Partikelgröße basiert dabei auf der Mie-Theorie, welche die Wechselwirkung zwischen Licht und Materie beschreibt (DIN/ISO 13320).

Bevorzugt sind die Kieselsäuren durch Fällung von Lösungen von Silikaten oder Flammenhydrolyse von Siliciumhalogeniden erhältlich.

Bevorzugt enthalten die erfindungsgemäßen Kautschukmischungen mindestens einen hydroxylgruppenhaltigen oxidischen Füllstoff aus der Reihe der Kieselsäuren, insbesondere mit einer spezifischen Oberfläche (BET) im Bereich von 20 bis 400 m²/g in einer Menge von 0,1 bis 200 phr, bevorzugt 20 bis 160 phr , besonders bevorzugt von 25 bis 140 phr, ganz besonders bevorzugt 30 - 120 phr.

In einer alternativen Ausführungsform enthalten die erfindungsgemäßen Kautschukmischungen als Füllstoff mindestens einen Ruß.

Bevorzugt enthalten die erfindungsgemäßen Kautschukmischungen mindestens einen Ruß in einer Menge von 0,1 bis 200 phr, bevorzugt 20 bis 160 phr, besonders bevorzugt 25 bis 140 phr, ganz besonders bevorzugt 30 bis 120 phr.

Bevorzugt sind Ruße, die nach dem Flammruß-, Furnace- oder Gasrußverfahren erhältlich sind und die eine spezifische Oberfläche (BET) im Bereich von 20 bis 200 m²/g besitzen, wie z.B. SAF-, ISAF-, IISAF-, HAF-, FEF- oder GPF-Ruße. Bevorzugt enthalten die erfindungsgemäßen Kautschukmischungen mindestens einen Ruß mit einer spezifische Oberfläche (BET) im Bereich von 20 bis 200 m²/g .

Besonders bevorzugt enthalten die erfindungsgemäßen Kautschukmischungen als Füllstoffe mindestens eine der oben genannten Kieselsäuren und mindestens einen der oben genannten Ruße.

Ganz besonders bevorzugt enthalten die erfindungsgemäßen Kautschukmischungen als Füllstoffe 20 bis 200 phr, bevorzugt 30 bis 160 phr, mindestens eine der oben genannten Kieselsäuren und 0,1 bis 120 phr, bevorzugt 0,1 bis 10 phr, mindestens einen der oben genannten Ruße.

Die Gesamtmenge an Ruß und kieselsäurebasierenden Füllstoffen in der erfindungsgemäßen Kautschukmischung beträgt vorzugsweise 21 bis 300 phr, besonders bevorzugt 50 bis 280 phr und ganz besonders bevorzugt 60 bis 240 phr.

### Vernetzer und Vulkanisationsbeschleuniger

Die erfindungsgemäßen Kautschukmischungen enthalten einen oder mehrere Vernetzer enthalten.

Bevorzugt enthalten die erfindungsgemäßen Kautschukmischungen mindestens einen Vernetzer aus der Reihe Schwefel und Schwefelspender sowie der Metalloxide ausgenommen ZnO wie z.B. Magnesiumoxid.

Schwefel kann in elementarer löslicher oder unlöslicher Form eingesetzt werden.

Besonders bevorzugt enthalten die erfindungsgemäßen Kautschukmischungen mindestens einen Schwefelspender und/oder Schwefel, ganz besonders bevorzugt Schwefel.

Als Schwefelspender kommen beispielsweise Dimorpholyldisulfid (DTDM), 2-Morpholinodithiobenzothiazol (MBSS), Caprolactamdisulfid, Dipentamethylen-thiuramtetrasulfid (DPTT), Tetramethylthiuramdisulfid (TMTD) und Tetrabenzyl-thiuramdisulfid (TBzTD) in Frage.

Die erfindungsgemäßen Kautschukmischungen enthalten im Allgemeinen 0,1 bis 20 phr, bevorzugt 0,5 bis 10 phr und besonders bevorzugt von 1,0 bis 8 phr des mindestens einen Vernetzers.

Die erfindungsgemäßen Kautschukmischungen können einen oder mehrere Vulkanisationsbeschleuniger enthalten.

Bevorzugt enthalten die erfindungsgemäßen Kautschukmischungen mindestens einen Vulkanisationsbeschleuniger, besonders bevorzugt aus der Gruppe der Mercaptobenzthiazole, Thiocarbamate, Dithiocarbamate, Thiurame, Thiazole, Sulfenamide, Thiazolsulfenamide, Xanthogenate, bi- oder polycyclische Amine, Thiophosphate, Dithiophosphate, Caprolactame, Thioharnstoffderivate, Guanidine, cyclischen Disulfane sowie Amine, insbesondere Zink-diamindiisocyanat, Hexamethylentetramin, 1,3-Bis(citraconimidomethyl)benzol und ganz besonders bevorzugt aus der Gruppe der Sulfenamide, ganz besonders bevorzugt N-Cyclohexylbenzothia-zolsulfenamid (CAS-Nr.: 95-33-0).

Die erfindungsgemäßen Kautschukmischungen enthalten im Allgemeinen 0,1 bis 20 phr, bevorzugt 0,5 bis 10 phr und besonders bevorzugt 1,0 bis 5 phr an mindestens einem der genannten Vulkanisationsbeschleuniger.

Bevorzugt enthalten die erfindungsgemäßen Kautschukmischungen mindestens einen Vernetzer und mindestens einen Vulkanisationsbeschleuniger.

Besonders bevorzugt enthalten die erfindungsgemäßen Kautschukmischungen mindestens einen Vernetzer aus der Reihe Schwefel und/oder Magnesiumoxid und mindestens einen Vulkanisationsbeschleuniger aus der Reihe der Merkaptobenzothiazole, Thiazolsulfenamide, Thiurame, Dithiocarbamate, Xanthogenate und Thiophosphate, besonders bevorzugt der Sulfenamide, ganz besonders bevorzugt N-Cyclohexylbenzothiazolsulfenamide (CAS-Nr.: 95-33-0).

Die Gesamtmenge an Vernetzer und Vulkanisationsbeschleuniger in den Kautschukmischungen beträgt bevorzugt 0,5 bis 15 phr, besonders bevorzugt von 2,0 bis 10 phr.

### Verstärkungsadditive

Die erfindungsgemäßen Kautschukmischungen können ein oder mehrere Verstärkungsadditive enthalten.

Vorzugsweise enthalten die erfindungsgemäßen Kautschukmischungen mindestens ein Verstärkungsadditiv aus der Reihe der schwefelhaltigen organischen Silane, insbesondere der Alkoxysilylgruppen-haltigen schwefelhaltigen Silane und ganz besonders bevorzugt der Trialkoxysilylgruppen-haltigen schwefelhaltigen organischen Silane.

Besonders bevorzugt enthalten die erfindungsgemäßen Kautschukmischungen ein oder mehrere schwefelhaltige Silane aus der Reihe Bis-(triethoxysilylpropyl)-tetrasulfan, Bis-(triethoxysilylpropyl -disulfan und 3-(Triethoxysilyl)-1-propanthiol. Die erfindungsgemäßen Kautschukmischungen enthalten im Allgemeinen 0,1 bis 20 phr, vorzugsweise 0,5 bis 15 phr und besonders bevorzugt 1,0 bis 6,5 phr an mindestens einem Verstärkungsadditiv.

### Kautschukhilfsmittel

Die erfindungsgemäßen Kautschukmischungen können weiterhin ein oder mehrere Kautschukhilfsmittel enthalten. Als Kautschukhilfsmittel kommen beispielsweise Alterungsschutzmittel, Haftmittel Wärmestabilisatoren, Lichtschutzmittel, Flammschutzmittel, Verarbeitungshilfsmittel, Schlagzähfestigkeitsverbesserer, Weichmacher, Tackifier, Treibmittel, Farbstoffe, Pigmente, Wachse, Streckmittel, organische Säuren wie Steearinsäure, Verzögerer, insbesondere Triethanolamin, Polyethylenglykol, Hexantriol, und Reversionsschutzmittel sowie Sekundärbeschleuniger in Frage.

Diese Kautschukhilfsmittel können den erfindungsgemäßen Kautschukmischungen in den für diese Hilfsmittel üblichen Mengen, die sich auch nach dem Verwendungszweck der daraus hergestellten Vulkanisate richten, zugesetzt werden. Übliche Mengen sind beispielsweise 0,1 bis 30 phr.

Die erfindungsgemäßen Kautschukmischungen können ein oder mehrere Alterungsschutzmittel enthalten. Als solche geeignet sind aminische Alterungsschutzmittel wie z. B. Diaryl-p-phenylendiaminen (DTPD), octyliertes Diphenylamin (ODPA), Phenyl-α-naphthylamin (PAN), Phenyl-β-naphthylamin (PBN), vorzugsweise solche auf Phenylendiaminbasis, z. B. N,N'-Dicyclohexyl-p-phenylendiamin (CCPD), N-Isopropyl-N'-phenyl-p-phenylendiamin, N-1,3-Dimethylbutyl-N'-phenyl-p-phenylen-diamin (6PPD), N-1,4-Dimethylpentyl-N'-phenyl-p-phenylendiamin (7PPD), N,N'-bis-(1,4-Dimethylpentyl)-p-phenylendiamin (77PD) sowie Phosphite wie Tris-(nonylphenyl)phosphit, polymerisiertes 2,2,4-Trimethyl-1,2-dihydrochinolin (TMQ), Methyl-2-Mercapto-benzimidazol (MMBI) und Zinkmethylmercaptobenzimidazol (ZMMBI) sowie Mischungen davon. Besonders bevorzugt wird das mindestens eine Alterungsschutzmittel ausgewählt aus der Gruppe bestehend aus N,N'-Dicyclohexyl-p-phenylendiamin (CCPD) und N-1,3-Dimethylbutyl-N'-phenyl-p-phenylen-diamin (6PPD).

Verarbeitungshilfsmittel sollen zwischen den Kautschuk-Partikeln wirksam werden und Reibungskräften beim Mischen, Plastifizieren und Verformen entgegenwirken. Als

Verarbeitungshilfsmittel können die erfindungsgemäßen Kautschukmischungen alle für die Verarbeitung von Kunststoffen üblichen Gleitmittel enthalten, wie beispielsweise Kohlenwasserstoffe, wie Öle, Paraffine und PE-Wachse, Fettalkohole mit 6 bis 20 C-Atomen, Ketone, Carbonsäuren, wie Fettsäuren und Montansäuren, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Um die Entflammbarkeit zu vermindern und die Rauchentwicklung beim Verbrennen zu verringern, können die erfindungsgemäße Kautschukmischungen Flammschutzmittel enthalten. Hierfür werden beispielsweise Antimontrioxid, Phosphorsäureester, Chlorparaffin, Aluminiumhydroxid, Borverbindungen, Zinkverbindungen ausgenommen ZnO, Molybdäntrioxid, Ferrocen, Calciumcarbonat oder Magnesiumcarbonat verwendet.

Vor der Vernetzung können der erfindungsgemäßen Kautschukmischungen auch weitere Kunststoffe beigefügt werden, die beispielsweise als polymere Verarbeitungshilfsmittel oder Schlagzähigkeitsverbesserer wirken. Diese Kunststoffe werden bevorzugt gewählt aus der Gruppe bestehend aus den Homo- und Copolymeren auf Basis von Ethylen, Propylen, Butadien, Styrol, Vinylacetat, Vinylchlorid, Glycidylacrylat, Glycidylmethacrylat, Acrylaten und Methacrylaten mit Alkoholkomponenten von verzweigten oder unverzweigten C1- bis C10-Alkoholen, wobei Polyacrylate mit gleichen oder verschiedenen Alkoholresten aus der Gruppe der C4- bis C8-Alkohole, insbesondere des Butanols, Hexanols, Octanols und 2-Ethylhexanols, Polymethylmethacrylat, Methylmethacrylat-Butylacrylat-Copolymere, Methylmethacrylat-Butylmethacrylat-Copolymere, Ethylen-Vinylacetat-Copolymere, chloriertes Polyethylen, Ethylen-Propylen-Copolymere, Ethylen-Propylen-Dien-Copolymere besonders bevorzugt sind.

Bekannte Haftmittel basieren auf Resorcin, Formaldehyd und Silica, die sogenannten RFS-Direkthaftsysteme. Diese Direkthaftsysteme können in beliebiger Menge der erfindungsgemäßen Kautschukmischung zu jedem Zeitpunkt des Einmischens in die erfindungsgemäßen Kautschukmischungen, eingesetzt werden.

In Kieselsäure-basierten Kautschukmischungen, wie sie bevorzugt zur Reifenherstellung eingesetzt werden, wird typischerweise Diphenylguanidin (DPG) oder werden strukturähnliche aromatische Guanidine als Sekundärbeschleuniger eingesetzt.

Dem Fachmann ist bekannt, dass DPG durch 1,6-bis(N,N-dibenzylthiocarbamoyldithio)-hexan, auch unter dem Handelsname Vulcuren^{®} bekannt, vorteilhaft substituiert werden kann. Ein Ersatz von DPG durch einen Sekundärbeschleuniger wie TBzTD (Tetrabenzylthiuramdisulfid) oder Dithiophosphate ist auch möglich.

Die erfindungsgemäßen Kautschukmischungen enthalten im Allgemeinen 0 oder von 0,1 bis 5,0 phr, bevorzugt 0,2 bis 3,5 phr an mindestens einem der genannten Sekundärbeschleuniger.

Im Folgenden sind bevorzugte erfindungsgemäße Kautschukmischungen aufgeführt:
Bevorzugt sind erfindungsgemäße Kautschukmischungen enthaltend
   - 50 bis 100 phr mindestens eines Naturkautschuks,
   - 0 bis 50 phr mindestens eines synthetischen Kautschuks,
   - 20 bis 160 phr an mindestens einer Kieselsäure, insbesondere mit einer spezifischen Oberfläche (BET) von 5 bis 1000, vorzugsweise 20 bis 400 m²/g, vorzugsweise mit Primärteilchengrößen von 100 bis 400 nm und/oder
   - 0,1 bis 160 phr an mindestens einem Ruß, insbesondere mit einer spezifischen Oberfläche (BET) im Bereich von 20 bis 200 m²/g, ,
      und
   - 0,5 bis 2,5 phr Zinkoxid mit einer BET-Oberfläche von ≥ 10 m²/g.
Besonders bevorzugt sind erfindungsgemäße Kautschukmischungen enthaltend
   - 50 bis 100 phr mindestens eines Naturkautschuks,
   - 0 bis 50 phr mindestens eines synthetischen Kautschuks,
   - 20 bis 160 phr an mindestens einer Kieselsäure, insbesondere mit einer spezifischen Oberfläche (BET) von 5 bis 1000, vorzugsweise 20 bis 400 m²/g, vorzugsweise mit Primärteilchengrößen von 100 bis 400 nm,
   - 0,1 bis 160 phr an mindestens einem Ruß, insbesondere mit einer spezifische Oberfläche (BET) im Bereich von 20 bis 200 m²/g,
   - 0,5 bis 20 phr an mindestens einem Vernetzer, insbesondere aus der Reihe der Schwefelspender und/oder Schwefel,
   - 0,5 bis 20 phr an mindestens einem Vulkanisationsbeschleuniger, insbesondere aus der Reihe der Sulfenamide,
   - 1,0 bis 6,5 phr an mindestens einem Verstärkungsadditiv, insbesondere aus der Gruppe der schwefelhaltigen Silane
      und
   - 0,5 bis 2,5 phr Zinkoxid mit einer BET-Oberfläche von ≥ 10 m²/g.

Die oben genannten weiteren Vorzugsbereiche der einzelnen Komponenten gelten auch für diese bevorzugten Mischungen.

### Verfahren zur Herstellung der Kautschukmischungen

Ein weiterer Gegenstand der vorliegenden Erfindung ist ein Verfahren zur Herstellung der erfindungsgemäßen Kautschukmischungen, dadurch gekennzeichnet, dass in einem Mischprozess die jeweiligen Komponenten gemischt werden. Bevorzugt werden mindestens ein Naturkautschuk undr mindestens ein Synthesekautschuk sowie Zinkoxid mit einer BET-Oberfläche von ≥ 10 m²/g, gegebenenfalls in Gegenwart von mindestens einem Füllstoff, gegebenenfalls mindestens einem Vernetzer, und gegebenenfalls den übrigen Komponenten und gegebenenfalls einem oder mehreren der oben genannten Kautschukhilfsmittel in den für diese Zusatzstoffe genannten allgemeinen und bevorzugten Mengen miteinander vermischt werden.

Die Herstellung der erfindungsgemäßen Kautschukmischungen erfolgt in üblicher Weise in bekannten Mischaggregaten, wie Walzen, Innenmischern, nachgeschalteten Mischwalzwerken und Mischextrudern bei Scherraten von 1 bis 1000 sec⁻¹.

Bevorzugt erfolgt die Herstellung der erfindungsgemäßen Kautschukmischungen in einem zweistufigen Mischprozess. In einer ersten Mischstufe werden zunächst die Füllstoffe, Alterungsschutzmittel sowie ggfs. weitere oben genannte Kautschukhilfsmittel in einem Innenmischer (Kneter) in den Kautschuk eingearbeitet. Die Mischtemperatur im Innenmischer beträgt bevorzugt 100 -180°C, besonders bevorzugt 110 - 170°C.

Danach erfolgt bevorzugt das sogenannte Nachzwicken, bevorzugt bei 140 - 170°C, besonders bevorzugt bei 150°C. Das Nachzwicken kann beispielsweise in einem Kneter oder Innenmischer erfolgen.

In einer zweiten Mischstufe werden Vernetzer, Vulkanisationsbeschleuniger und ggfs. weitere oben genannte Kautschukhilfsmittel, bevorzugt Alterungsschutzmittel, zu der aus der ersten Mischstufe erhaltenen Mischung gegeben. Die Mischtemperatur in der zweiten Mischstufe beträgt vorzugsweise 30 - < 100°C, bevorzugt 30 - < 80°C, insbesondere von 40 bis <60°C.

Bevorzugt wird die zweite Mischstufe auf einem Walzwerk durchgeführt, welches mit Wasser temperierte Walzen enthält. Dies ermöglicht eine geringere Mischtemperatur als in der ersten Mischstufe.

Die Zugabe des Zinkoxids mit einer BET-Oberfläche von ≥ 10 m²/g kann zu jedem Zeitpunkt des Mischens erfolgen, bevorzugt in der ersten Mischstufe des Mischvorgangs.

### Verfahren zur Herstellung der Kautschukvulkanisaten

Die vorliegende Erfindung betrifft weiterhin ein Verfahren zur Herstellung von Kautschukvulkanisaten, dadurch gekennzeichnet, dass die erfindungsgemäße Kautschuk-mischung bei Temperaturen von 120 bis 200°C, bevorzugt bei 140 bis 180°C erhitzt wird.

Das Verfahren zur Herstellung der erfindungsgemäßen Kautschukvulkanisate kann in einem weiten Druckbereich durchgeführt werden, bevorzugt wird es bei einem Druck im Bereich von 10 bis 200 bar durchgeführt.

Weiterer Gegenstand der vorliegenden Erfindung sind Kautschukvulkanisate, die erhältlich sind durch Vulkanisation der erfindungsgemäßen Kautschukmischungen.

Die erfindungsgemäßen Kautschukvulkanisate weisen insbesondere bei Anwendung in Reifen, besonders bevorzugt in Leicht-LKW-, LKW-Reifen und PKW-Reifen, einen unerwartet niedrigen Abrieb, bevorzugt DIN-Abrieb, auf, bei vergleichbaren oder sogar besseren anwendungstechnischen Eigenschaften.

Der sogenannte DIN-Abrieb wird im Rahmen dieser Erfindung bestimmt gemäß Verfahren B (rotierende Prüfkörper) der DIN ISO 4649.

Die erfindungsgemäßen Kautschukvulkanisate eignen sich zur Herstellung von Formkörpern aller Art wie z.B. Reifenbauteilen, technischen Gummiartikeln wie Dämpfungselementen, Walzenbelägen, Belägen von Förderbändern, Riemen, Spinnkopsen, Dichtungen, Golfballkernen, Schuhsohlen, insbesondere eignen sie sich zur Herstellung von Reifen und Reifenteilen, wie Reifenlaufflächen, Subtreads, Karkassen Seitenwänden von Reifen, verstärkten Seitenwänden für Notlaufreifen und Apexmischungen. Reifenlaufflächen schließen dabei auch Laufflächen von Sommer-, Winter- und All-Seasons-Reifen sowie Laufflächen von PKW- und LKW-, Leicht-LKW-Reifen ein.

Bevorzugte Formkörper sind Reifen und Reifenteile, besonders bevorzugt Laufflächen von PKW-, LKW- und Leicht-LKW-Reifen, enthaltend ein erfindungsgemäßes Kautschukvulkanisat.

Weiterer Gegenstand der vorliegenden Erfindung ist die Verwendung von Zinkoxid mit einer BET-Oberfläche von ≥ 10 m²/g in einer zur Herstellung von abriebarmen Vulkanisaten aus schwefelvernetzbaren Kautschukmischungen, insbesondere in einer Menge von 0,5 bis 2,5 phr. bei einer Vulkanisationstemperatur von 120 bis 200°C.

Weiterer Gegenstand der vorliegenden Erfindung ist die Verwendung von Zinkoxid, insbesondere in einer Menge von 0,5 bis 2,5 phr, mit einer BET-Oberfläche von ≥ 10 m²/g in Kautschukmischungen, -vulkanisaten und daraus erhältlichen Formkörpern zur Reduzierung des Abriebs, bevorzugt des DIN-Abriebs, von Formkörpern aus Kautschukvulkanisaten, bevorzugt von Reifen und Reifenteilen.

Die Erfindung soll anhand der folgenden Beispiele erläutert werden, ohne diese jedoch darauf zu beschränken.

### Ausführungsbeispiele

**Tabelle 1: Liste der Einsatzstoffe, Abkürzungen und Hersteller**

| Handelsname | Erläuterung | Hersteller/Vertrieb |
|---|---|---|
| BUNA CB 24 | Neodymium Butadiene Rubber (BR) | Arlanxeo Deutschland GmbH |
| TSR / RSS 3 (vor-mastiziert auf DEFO-Härte 1000) | Naturkautschuk (NR) | Weber & Schaer GmbH&Co |
| CORAX^{®} N 234 | Ruß | Degussa-Evonik GmbH |
| TUDALEN^{®} 1849-TE | Prozess-Öl | Hansen & Rosenthal (H&R GRUPPE) |
| PALMERA^{®} A9818 | Stearinsäure | KLK OLEO |
| ZINKOXYD AKTIV^{®} | Zinkoxid mit BET-Oberfläche von 55 m²/g | Lanxess Deutschland GmbH |
| VULKACIT^{®} CZ/C | N-Cyclohexyl-2-benzothiazol-sulfenamid | Lanxess Deutschland GmbH |
| Avozinc-Rotsiegel (Pulver) | Zinkoxid mit BET-Oberfläche von 4-6 m²/g | Avokal^{®} GmbH |
| MAHLSCHWEFEL 90/95 CHANCEL | Schwefel | Solvay Deutschland GmbH |
| VULKANOX^{®} 4020/LG | *N*-1,3-Dimethylbutyl-*N*'-phenyl-p-phenylendiamin | Lanxess Deutschland GmbH |
| VULKASIL^{®} S | Kieselsäure | Lanxess Deutschland GmbH |
| SI^{®} 69 | Bis[3-(triethoxysilyl)propyl]polysulfide | Evonik Resource Efficiency GmbH |
| RHENOGRAN^{®} DPG-80 | *N*,*N*'-Diphenylguanidine (Polymer gebunden; 80% DPG enthaltend) | Lanxess Deutschland GmbH |

### Herstellung der Kautschukvulkanisate

Es wurden die Kautschukmischungen der nicht erfindungsgemäßen Beispiele 1 und 2 analog der "Mischung A" aus der US2019/0345314A1 sowie des erfindungsgemäßen Beispiels 3 gemäß den in Tabelle 1 angegeben Rezepturen hergestellt.

Die Beispiele 1 bis 3 unterscheiden sich darin, dass in Beispiel 1 ein Zinkoxid (Rotsiegel) Gehalt von 3 phr eingesetzt wurde, hingegen in Beispiel 2 ein Zinkoxid (Rotsiegel)-Gehalt von 1,5 phr und in dem erfindungsgemäßen Beispiel 3 ein Zinkoxyd aktiv^{®}-Gehalt von 1,5 phr eingesetzt wurde.

Die Herstellung der Kautschukmischungen erfolgte in folgenden Schritten:

### 1. Mischstufe:

▪ BUNA^{®} CB 24 und der Naturkautschuk (NR) werden in einem Innenmischer vorgelegt und ca. 30 Sekunden gemischt
▪ Zugabe zweidrittel VULKASIL^{®} S, zweidrittel SI^{®} 69 mischen für ca 60 Sekunden
▪ Zugabe eindrittel VULKASIL^{®} S, eindrittel SI^{®} 69, sowie TUDALEN 1849-TE, mischen ca. 60 Sekunden

Zugabe von CORAX^{®} N 234, PALMERA A9818, VULKANOX^{®} 4020/LG, ZINKOXID (ROTSIEGEL) oder Zinkoxyd aktiv^{®}, mischen für ca. 60 Sekunden
Dieser Mischungsvorgang erfolgte bei einer Temperatur von 110°C.

Nach Abschluss der ersten Mischstufe wird das Mischstück von einem nachgeschalteten Walzwerk aufgenommen und zu einer Platte, einem Streifen oder Pellets ausgeformt und für 24 Stunden bei Raumtemperatur gelagert.

Verarbeitungstemperaturen liegen hierbei bei 50 °C.

Danch erfolgte ein Mischen bei 150°C in einem Kneter /Innenmischer (das sogenannte Nachzwicken).

### 2. Mischstufe:

Die Zugabe von Zusatzstoffen wie dem MAHLSCHWEFEL 90/95 CHANCEL, VULKACIT^{®} CZ/C, Rhenogran^{®} DPG-80, auf einer Walze erfolgte bei 70°C.

**Tabelle 2 Kautschukrezeturen/Eienschaften**

| | | | | | |
|---|---|---|---|---|---|
| | | Beispiel | | | |
| | Einheit | 1 | 2 | 3 | |
| | | Angaben in phr | | | |
| BUNA CB 24 | | 20 | 20 | 20 | |
| TSR / RSS 3 | | 80 | 80 | 80 | |
| CORAX N 234 | | 3 | 3 | 3 | |
| TUDALEN 1849-TE | | 8 | 8 | 8 | |
| PALMERA A9818 | | 2,5 | 2,5 | 2,5 | |
| VULKANOX 4020/LG | | 1,5 | 1,5 | 1,5 | |
| ZINKOXID ROTSIEGEL | | 3 | 1,5 | | |
| SCHWEFEL GEMAHLEN | | 1,5 | 1,5 | 1,5 | |
| VULKACIT CZ/EGC | | 1,8 | 1,8 | 1,8 | |
| ZINKOXYD AKTIV | | | | 1,5 | |
| VULKASIL S | | 57,19 | 57,19 | 57,19 | |
| SI 69 | | 5,7 | 5,7 | 5,7 | |
| RHENOGRAN DPG-80 | | 2,5 | 2,5 | 2,5 | |
| | | | | | |

| **Eigenschaften der Kautschukmischung (unvulkanisiert)** | | | | | bevorzugter Bereich |
|---|---|---|---|---|---|
| | | | | | |
| ML 1+4 | ME | 54 | 59 | 55 | 50-56 |
| | | | | | |
| Scorch-Zeit (MS-t3) | s | 756 | 663 | 786 | 700-800 |
| MS-t5 | s | 852 | 723 | 872 | 800-900 |
| MS-t10 | s | 996 | 814 | 1002 | 950-1050 |
| MS-t18 | s | 1106 | 883 | 1104 | 950-1150 |
| | | | | | |
| Ausvulkanisationszeit (Umsatzzeit 95%) | [sec] | 785 | 509 | 609 | 600-800 |
| | | | | | |

| **Eigenschaften des Vulkanisats** | | | | | |
|---|---|---|---|---|---|
| | | | | | |
| Härte Mittelwert | Shore A | 75 | 74 | 73 | 70-80 |
| | | | | | |
| Abrieb DIN 53516 (ISO 4649) | mm³ | 114 | 101 | 102 | <114 |
| | | | | | |
| Rückprallelastizität (23°C) | % | 55 | 53 | 53 | 50-55 |
| | | | | | |
| Rückprallelastizität (60°C) | % | 64 | 63 | 63 | 60-65 |
| Modul (S300) | MPa | 17 | 15 | 14 | "10-20 |
| Bruchdehnung | % | 422 | 483 | 501 | 400-550 |
| Zugfestigkeit | MPa | 25 | 26 | 27 | min. 25 |

### Technische Prüfung

Die Kautschukmischungen der Beispiele 1 bis 3 sowie ihre bei 130°C hergestellten Vulkanisate wurden den unten angegebenen technischen Prüfungen unterzogen. Die ermittelten Werte sind der Tabelle 2 zu entnehmen.

Sehr gute Eigenschaften der Kautschukmischungen bzw. ihrer Vulkanisate wurde erreicht, wenn sich ihre Eigenschaftswerte in dem angegebenen "bevorzugten Bereich" befinden.

Für die Tests an Prüfkörpern wurden folgende Testverfahren angewandt:
- Mooney-Viskosität (ML 1-4): Ein standardisiertes Messverfahren; es wird das Drehmoment der Kautschukmischung bei Erhöhung der Temperatur (äußere Temperatur 100°C) gemessen. Nach der entsprechenden Vorwärmzeit dreht der Rotor mit konstant 2/min. Das dabei gemessene Drehmoment wird in ME umgerechnet. Verwendet wurde ein L-Rotor.
- Shore-A-Härte bei Raumtemperatur (RT) gemäß DIN 53 505.

### Verwendetes Rheometer (Vulkameter) und An-/ Ausvulkanisationszeit

Der Vulkanisationsverlauf am MDR (moving die rheometer) und dessen analytischen Daten wurden an einem Monsanto-Rheometer MDR 2000 nach ASTM D5289-95 gemessen.

Als Anvulkanisationszeit (Scorch-Zeit, t5) wird die Zeit bestimmt, bei der 5% des Kautschuks vernetzt sind. Entsprechendes gilt für die Zeiten t3, t10 und t18 bei 3%, 10% und 18% Vernetzung). Die gewählte Temperatur betrug 130°C.

Als Ausvulkanisationszeit (t95) wird die Zeit bestimmt, bei der 95% des Kautschuks vernetzt sind. Die gewählte Temperatur betrug 130°C.

### Bestimmung der Bruchdehnung und Zugfestigkeit

Diese Messungen erfolgten nach DIN 53504 (Stab S 2) bei einer Temperatur von 23°C.

### Bestimmung des DIN-Abriebs

Der DIN-Abrieb wurde nach DIN ISO 4649 gemessen (Verfahren B).

### Bestimmung der Rückprallelastizität

Die Rückprallelastizität wurde bei Raumtemperatur (RT) und bei 60°C gemäß DIN 53 512 gemessen.

Das Dämpfungsverhalten einer Kautschukmischung zeigt sich anhand des Wertes für die Rückprallelastizität. Dem Fachmann ist bekannt, je kleiner der Wert, desto besser das Dämpfungsverhalten.

### Fazit:

Überraschend wurde gefunden, dass mit der erfindungsgemäßen Kautschukmischung gemäß Beispiel 3 eine längere Anvulkanisationszeit (t5), eine kürzere Ausvulkanisationszeit (t95), deutlich höhere Werte der Bruchdehnung und Zugfestigkeit, ein deutlich niedriger DIN-Abriebwert sowie ein deutlich niedrigerer Rückprallelastizitätswert zu erzielen ist als im Vergleich zu der nicht erfindungsgemäßen Kautschukmischung des Beispiels 1.

Des Weiteren weist die erfindungsgemäßen Kautschukmischung des Beispiels 3 eine Reduzierung des Zinkoxidgehalts um 50% in der Kautschukmischung auf, unter Einhaltung der bevorzugten anwendungstechnischen Eigenschaften.

Die erfindungsgemäße Kautschukmischung zeigte keine Stippen auf der Oberfläche, so dass von einer guten Vermischung der verwendeten Additive ausgegangen wird.

## Patentansprüche

1. Kautschukmischungen, enthaltend
- 50 bis 100 phr mindestens eines Naturkautschuks,
- 0 bis 50 phr mindestens eines synthetischen Kautschuks,
- 0,5 bis 2,5 phr Zinkoxid mit einer BET-Oberfläche von ≥ 10 m²/g,
- 0,1 bis 320 phr mindestens einen hydroxylgruppenhaltigen oxidischen Füllstoff und/oder mindestens einen Ruß und
- 0,5 bis 20 phr mindestens eines Vernetzers, insbesondere aus der Reihe der Schwefelspender und/oder Schwefel.

2. Kautschukmischungen nach Anspruch 1, enthaltend
- 70 bis 90 phr mindestens eines Naturkautschuks,
- 10 bis 30 phr mindestens eines synthetischen Kautschuks.

3. Kautschukmischungen nach Anspruch 1, enthaltend 0,5 bis < 6,5 phr eines an mindestens einem Verstärkungsadditiv, insbesondere aus der Gruppe der schwefelhaltigen Silane.

4. Kautschukmischungen nach Anspruch 1, enthaltend
- 50 bis 100 phr mindestens eines Naturkautschuks,
- 0 bis 50 phr mindestens eines synthetischen Kautschuks,
- 20 bis 160 phr an mindestens einer Kieselsäure, insbesondere mit einer spezifischen Oberfläche (BET) von 5 bis 1000, vorzugsweise 20 bis 400 m²/g und/oder
- 0,1 bis 160 phr an mindestens einem Ruß, insbesondere mit einer spezifischen Oberfläche (BET) im Bereich von 20 bis 200 m²/g,
- 0,5 bis 20 phr mindestens eines Vernetzers, insbesondere aus der Reihe der Schwefelspender und/oder Schwefel
und
- 0,5 bis 2,5 phr Zinkoxid mit einer BET-Oberfläche von ≥ 10 m²/g.

5. Kautschukmischungen nach Anspruch 1, enthaltend
- 50 bis 100 phr eines Naturkautschuks,
- 0 bis 50 phr eines synthetischen Kautschuks,
- 20 bis 160 phr an mindestens einer Kieselsäure, insbesondere mit einer spezifischen Oberfläche (BET) von 5 bis 1000, vorzugsweise 20 bis 400 m²/g,
- 0,1 bis 160 phr an mindestens einem Ruß, insbesondere mit einer spezifische Oberfläche (BET) im Bereich von 20 bis 200 m²/g,
- 0,5 bis 20 phr an mindestens einem Vernetzer, insbesondere aus der Reihe der Schwefelspender und/oder Schwefel,
- 0,5 bis 20 phr an mindestens einem Vulkanisationsbeschleuniger, insbesondere aus der Reihe der Sulfenamide,
- 1,0 bis 6,5 phr an mindestens einem Verstärkungsadditiv, insbesondere aus der Gruppe der schwefelhaltigen Silane
und
- 0,5 bis 2,5 phr Zinkoxid mit einer BET-Oberfläche von ≥ 10 m²/g.

6. Verfahren zur Herstellung von Kautschukmischungen nach wenigstens einem der vorgenannten Ansprüche **dadurch gekennzeichnet, dass** in einem Mischprozess die jeweiligen Komponenten gemischt werden.

7. Verwendung der Kautschukmischungen nach wenigstens einem der vorgenannten Ansprüche zur Herstellung von Vulkanisaten und Kautschukformkörper aller Art, insbesondere zur Herstellung von Reifen und Reifenbauteilen.

8. Vulkanisat welches durch Vulkanisation wenigstens einer Kautschukmischung nach einem der Ansprüche 1 - 5, vorzugsweise bei einer Temperatur von 120 bis 200°C erhalten wurde.

9. Fahrzeugreifen, **dadurch gekennzeichnet, dass** er wenigstens ein Vulkanisat nach Anspruch 8 aufweist.

10. Fahrzeugreifen, **dadurch gekennzeichnet, dass** er wenigstens ein Vulkanisat nach Anspruch 8 im Laufstreifen aufweist.

11. Verwendung von Zinkoxid mit einer BET-Oberfläche von ≥ 10 m²/g zur Herstellung von abriebarmen Vulkanisaten aus schwefelvernetzbaren Kautschukmischungen bei einer Vulkanisationstemperatur von 120 bis 200°C.

12. Verwendung von Zinkoxid mit einer BET-Oberfläche von ≥ 10 m²/g in Kautschukmischungen, -vulkanisaten und daraus erhältlichen Formkörpern zur Reduzierung des Abriebs, bevorzugt des DIN-Abriebs, von Formkörpern aus Kautschukvulkanisaten, bevorzugt von Reifen und Reifenteilen.
